(19)

Europäisches
Patentamt

European
Patent Office

Office européen
des brevets

(11) **EP 4 292 709 A1**

(12) **EUROPEAN PATENT APPLICATION**
published in accordance with Art. 153(4) EPC

(43) Date of publication:
**20.12.2023 Bulletin 2023/51**

(21) Application number: **21925827.4**

(22) Date of filing: **15.12.2021**

(51) International Patent Classification (IPC):
**B01J 35/10** (2006.01)          **C01G 25/00** (2006.01)
**B01J 23/10** (2006.01)

(52) Cooperative Patent Classification (CPC):
**B01J 23/10; B01J 35/10; C01G 25/00**

(86) International application number:
**PCT/JP2021/046309**

(87) International publication number:
**WO 2022/172584 (18.08.2022 Gazette 2022/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.02.2021   JP 2021019249**

(71) Applicant: **Mitsui Mining & Smelting Co., Ltd.
Shinagawa-ku
Tokyo 141-8584 (JP)**

(72) Inventors:
• **SATO Takahiro
Ageo-shi, Saitama 362-0025 (JP)**
• **WATANABE Satoshi
Ageo-shi, Saitama 362-0025 (JP)**

(74) Representative: **Novagraaf Technologies
Bâtiment O2
2, rue Sarah Bernhardt
CS90017
92665 Asnières-sur-Seine Cedex (FR)**

(54) **COMPOSITE OXIDE AND METHOD FOR PRODUCING SAME**

(57)     An object of the present invention is to provide a $CeO_2$-$ZrO_2$-based complex oxide having a sufficiently reduced particle size and a method for producing the $CeO_2$-$ZrO_2$-based complex oxide, and there are provided a complex oxide containing a zirconium element, a cerium element, and optionally another rare earth metal element, wherein $D_{50}$ and $D_{90}$ of the complex oxide measured by a laser diffraction scattering particle size distribution measurement method are 0.5 $\mu$m or less and 1 $\mu$m or less, respectively, and a method for producing the complex oxide.

EP 4 292 709 A1

**Description**

FIELD OF THE INVENTION

The present invention relates to a complex oxide containing a cerium element and a zirconium element (hereinafter sometimes referred to as "$CeO_2$-$ZrO_2$-based complex oxide") and a method for producing the complex oxide.

BACKGROUND ART

Exhaust gas emitted from an internal combustion engine of an automobile, a motorcycle or the like contains harmful components, such as hydrocarbons (HC), carbon monoxide (CO) and nitrogen oxide (NOx). As an exhaust gas purification catalyst that purifies and detoxifies these harmful components, a three-way catalyst having a catalytic activity to oxidize HC and CO and convert them to water and carbon dioxide, as well as to reduce NOx and convert it to nitrogen, has been used.

To mitigate fluctuations in the oxygen concentration in the exhaust gas and to efficiently purify HC, CO, NOx and the like, a material having an oxygen storage capacity (OSC) ("OSC material"), such as a $CeO_2$-$ZrO_2$-based complex oxide, has been used as a constituent material of a three-way catalyst.

For example, Patent Document 1 discloses a method for producing a $CeO_2$-$ZrO_2$-based complex oxide. In Patent Document 1, a $CeO_2$-$ZrO_2$-based complex oxide is produced by mixing cerium chloride, zirconium oxychloride, praseodymium chloride, and water, adding ammonium peroxodisulfate to the mixture to obtain a slurry containing sulfate, adding aqueous ammonia to the obtained slurry to obtain a slurry containing hydroxide, filtering and washing the obtained slurry to obtain a cake, and calcining the obtained cake.

It is known that exhaust gas contains particulate matter (PM) in addition to harmful components such as HC, CO, and NOx, and such particulate matter causes air pollution. For example, a gasoline direct injection engine (GDI engine) used in a vehicle equipped with a gasoline engine is fuel-efficient and high-power, but is known to discharge a larger amount of PM in exhaust gas than a conventional port injection engine. In order to respond to an environmental regulation on PM, the installation of a filter with a PM collecting function (GPF: Gasoline Particulate Filter) is required, not only for a vehicle equipped with a diesel engine, but also for a vehicle equipped with a gasoline engine such as GDI.

For example, a substrate having a structure called a wall-flow type has been used as GPF. The wall-flow type substrate includes an inflow-side cell extending in the exhaust gas flow direction, an outflow-side cell extending in the exhaust gas flow direction, and a porous partition wall separating the inflow-side cell and the outflow-side cell. In the inflow-side cell, the end on the exhaust gas inflow side in the exhaust gas flow direction is open, and the end on the exhaust gas outflow side in the exhaust gas flow direction is closed. In the outflow-side cell, the end on the exhaust gas inflow side in the exhaust gas flow direction is closed, and the end on the exhaust gas outflow side in the exhaust gas flow direction is open. The exhaust gas that has flowed into the wall-flow type substrate from the end (opening) on the exhaust gas inflow side of the inflow-side cell passes through the porous partition wall and flows out from the end (opening) on the exhaust gas outflow side of the outflow-side cell. When the exhaust gas passes through the porous partition wall, PM in the exhaust gas is trapped in the pores of the partition wall.

Since space for installing an exhaust gas purification catalyst is usually limited, technologies for collecting PM and purifying harmful components such as HC, CO, and NOx by supporting a noble metal catalyst such as Pt, Pd, and Rh on a GPF have been studied.

For example, Patent Document 2 discloses formation of a catalyst layer within a porous partition wall in a wall-flow type substrate. In Patent Document 2, a catalyst layer is formed by grinding a slurry containing a Pd-supported alumina powder, a Rh-supported zirconia-lanthanum-modified alumina powder, and a $CeO_2$-$ZrO_2$-based complex oxide powder with a ball mill to obtain a slurry having $D_{90}$ of 3.0 $\mu$m, and impregnating the porous partition wall with the obtained slurry.

CITATION LIST

PATENT DOCUMENTS

Patent Document 1: JP 2018-047425 A
Patent Document 2: JP 2019-198838 A

SUMMARY OF THE INVENTION

When impregnating a porous partition wall with a $CeO_2$-$ZrO_2$-based complex oxide, it is necessary to use a $CeO_2$-$ZrO_2$-based complex oxide having a reduced particle size. This is because when impregnating a porous partition wall with a $CeO_2$-$ZrO_2$-based complex oxide having an insufficiently reduced particle size, the pores of the porous partition wall are closed, and the pressure-loss increases.

However, in the method disclosed in Patent Document 1, sintering occurs in the calcining process, and thus a $CeO_2$-$ZrO_2$-based complex oxide having a sufficiently reduced particle size cannot be obtained.

Further, as disclosed in Patent Document 2, dry or wet grinding of a $CeO_2$-$ZrO_2$-based complex oxide usually achieves only a few micron level of $D_{90}$, and a $CeO_2$-$ZrO_2$-based complex oxide having a sufficiently reduced particle size cannot be obtained.

Further, even when a $CeO_2$-$ZrO_2$-based complex oxide is classified with a sieve, a $CeO_2$-$ZrO_2$-based complex oxide having a sufficiently reduced particle size cannot be obtained.

Accordingly, an object of the present invention is to provide a $CeO_2$-$ZrO_2$-based complex oxide having a sufficiently reduced particle size and a method for producing the $CeO_2$-$ZrO_2$-based complex oxide.

To achieve the object, the present invention provides a complex oxide containing a zirconium element, a cerium element, and optionally another rare earth metal element, wherein $D_{50}$ and $D_{90}$ of the complex oxide measured by a laser diffraction scattering particle size distribution measurement method are $0.5\ \mu m$ or less and $1\ \mu m$ or less, respectively.

In addition, the present invention provides a method for producing a complex oxide, including:

(a) preparing for a raw material solution containing water, a zirconium salt, a cerium salt, and optionally another rare earth metal salt;
(b) adding to the raw material solution, a first precipitant selected from: an aqueous solution containing a sulfate ion; and a compound that can dissolve in water to produce a sulfate ion, to form a first precipitate containing a zirconium element, thereby obtaining a first slurry containing the first precipitate;
(c) subjecting the first slurry to a wet grinding treatment;
(d) adding to the first slurry after the wet grinding treatment, a second precipitant selected from: an aqueous solution containing a hydroxide ion; and a compound that can dissolve in water to produce a hydroxide ion, to form a second precipitate containing a zirconium element, a cerium element, and optionally another rare earth metal element, thereby obtaining a second slurry containing the second precipitate;
(e) obtaining a cake from the second slurry; and
(f) calcining the cake to produce a complex oxide containing a zirconium element, a cerium element, and optionally another rare earth metal element.

According to the present invention, there is provided a $CeO_2$-$ZrO_2$-based complex oxide having a sufficiently reduced particle size and a method for producing the $CeO_2$-$ZrO_2$-based complex oxide.

DETAILED DESCRIPTION OF THE INVENTION

Hereinafter, the present invention will be described. Unless otherwise specified herein, the term "another rare earth metal element" means a rare earth metal element other than a cerium element, the term "another rare earth metal ion" means a rare earth metal ion other than a cerium ion, the term "another rare earth metal salt" means a rare earth metal salt other than a cerium salt, and the term "another water-soluble rare earth metal salt" means a water-soluble rare earth metal salt other than a water-soluble cerium salt.

< <Complex Oxide> >

The complex oxide of the present invention contains a zirconium element, a cerium element, and optionally another rare earth metal element.

The amount of the zirconium element contained in the complex oxide of the present invention in terms of zirconium oxide ($ZrO_2$) is preferably 20% by mass or more and 90% by mass or less, more preferably 30% by mass or more and 80% by mass or less, and still more preferably 40% by mass or more and 70% by mass or less, based on the mass of the complex oxide of the present invention, from the viewpoint of improving the heat resistance of the complex oxide.

The amount of the cerium element contained in the complex oxide of the present invention in terms of cerium oxide ($CeO_2$) is preferably 5% by mass or more and 70% by mass or less, more preferably 10% by mass or more and 50% by mass or less, and still more preferably 15% by mass or more and 40% by mass or less, based on the mass of the complex oxide of the present invention, from the viewpoint of improving the oxygen storage capacity of the complex oxide.

The ratio (mass ratio) of the amount of the zirconium element in terms of zirconium oxide to the amount of the cerium element in terms of cerium oxide is preferably from 0.5 to 8, more preferably from 1 to 7, and still more preferably from 1.1 to 5, from the viewpoint of balancing the oxygen storage capacity and the heat resistance of the complex oxide.

The complex oxide of the present invention preferably contains one kind, two kinds, or three or more kinds of the other rare earth metal elements from the viewpoint of improving the heat resistance of the complex oxide. The other rare earth metal element can be selected from, for example, yttrium, praseodymium, scandium, lanthanum, neodymium, samarium, europium, gadolinium, terbium, dysprosium, holmium, erbium, thulium, ytterbium, lutetium elements, and the like, and is preferably selected from lanthanum, neodymium, and praseodymium elements. The complex oxide of the present invention may contain, for example, one kind, two kinds, or three kinds of rare earth metal elements selected from lanthanum, neodymium, and praseodymium elements.

The amount of the other rare earth metal element contained in the complex oxide of the present invention in terms of oxide (when the complex oxide of the present invention contains two or more kinds of the other rare earth metal elements, it means the sum of the amounts of the two or more kinds of the other rare earth metal elements in terms of oxide) is preferably 5% by mass or more and 35% by mass or less, more preferably 7% by mass or more and 30% by mass or less, and still more preferably 10% by mass or more and 25% by mass or less, based on the mass of the complex oxide of the present invention, from the viewpoint of improving the heat resistance of the complex oxide. Oxide of the other rare earth metal element, excluding a praseodymium element and a terbium element, is sesqui oxide ($Ln_2O_3$, wherein Ln represents a rare earth metal element). Praseodymium oxide is usually $Pr_6O_{11}$, and terbium oxide is usually $Tb_4O_7$.

When the complex oxide of the present invention contains a lanthanum element, the amount of the lanthanum element contained in the complex oxide of the present invention in terms of lanthanum oxide ($La_2O_3$) is preferably 0.1% by mass or more and 30% by mass or less, more preferably 0.5% by mass or more and 25% by mass or less, and still more preferably 1% by mass or more and 20% by mass or less, based on the mass of the complex oxide of the present invention, from the viewpoint of improving the heat resistance of the complex oxide.

When the complex oxide of the present invention contains a neodymium element, the amount of the neodymium element contained in the complex oxide of the present invention in terms of neodymium oxide ($Nd_2O_3$) is preferably 0.1% by mass or more and 30% by mass or less, more preferably 0.5% by mass or more and 25% by mass or less, and still more preferably 1% by mass or more and 20% by mass or less, based on the mass of the complex oxide of the present invention, from the viewpoint of improving the heat resistance of the complex oxide.

When the complex oxide of the present invention contains a praseodymium element, the amount of the praseodymium element contained in the complex oxide of the present invention in terms of praseodymium oxide ($Pr_6O_{11}$) is preferably 0.1% by mass or more and 30% by mass or less, more preferably 0.5% by mass or more and 25% by mass or less, and still more preferably 1% by mass or more and 20% by mass or less, based on the mass of the complex oxide of the present invention, from the viewpoint of improving the heat resistance of the complex oxide.

In the complex oxide of the present invention, cerium oxide and zirconium oxide may each form a single phase (cerium oxide single phase or zirconium oxide single phase) in addition to a solid solution phase.

In the complex oxide of the present invention, the other rare earth metal element or oxide thereof may form a solid solution phase together with cerium oxide and/or zirconium oxide, or may form a single phase.

The bulk composition of the complex oxide of the present invention (percentage by mass of each metal element in terms of oxide in the whole of the complex oxide of the present invention) can be analyzed by X-ray fluorescence spectroscopy. The bulk composition analysis by X-ray fluorescence spectroscopy is preferably performed according to the conditions described in the Examples.

The complex oxide of the present invention is preferably in a powder form.

The $D_{50}$ of the complex oxide of the present invention is preferably 0.5 $\mu$m or less, more preferably 0.45 $\mu$m or less, and still more preferably 0.4 $\mu$m or less, from the viewpoint of suppressing the closing of the pores of the porous partition wall and the increase in pressure-loss caused by the closing when the porous partition wall in the wall-flow type substrate is impregnated with the complex oxide. The lower limit is preferably 0.05 $\mu$m, more preferably 0.1 $\mu$m.

The $D_{90}$ of the complex oxide of the present invention is preferably 1 $\mu$m or less, more preferably 0.8 $\mu$m or less, and still more preferably 0.7 $\mu$m or less, from the viewpoint of suppressing the closing of the pores of the porous partition wall and the increase in pressure-loss caused by the closing when the porous partition wall in the wall-flow type substrate is impregnated with the complex oxide. The lower limit is preferably 0.2 $\mu$m, more preferably 0.3 $\mu$m.

The $D_{50}$ and $D_{90}$ of the complex oxide of the present invention are particle sizes at which the cumulative volumes reach 50% and 90%, respectively, in the volume-based particle size distribution of the complex oxide of the present invention obtained by the laser diffraction scattering particle size distribution measurement method. The laser diffraction scattering particle size distribution measurement method is preferably performed according to the conditions described in the Examples.

Preferably, the complex oxide of the present invention can maintain a specific surface area even when exposed to high-temperature exhaust gas. The specific surface area of the complex oxide of the present invention measured by the BET method after heat treatment at 1000°C for 3 hours in an air atmosphere is preferably 20 $m^2/g$ or more, more preferably 22 $m^2/g$ or more, and still more preferably 25 $m^2/g$ or more. The upper limit is preferably 90 $m^2/g$, more preferably 80 $m^2/g$.

The measurement of the specific surface area by the BET method is preferably performed according to the conditions described in the Examples.

In cases where the complex oxide of the present invention contains the other rare earth metal element, it is preferable that the percentage by mass of the other rare earth metal element in terms of oxide in the surface of the complex oxide of the present invention is larger than the percentage by mass of the other rare earth metal element in terms of oxide in the whole of the complex oxide of the present invention, from the viewpoint of improving the heat resistance of the complex oxide and maintaining the specific surface area of the complex oxide even when exposed to high-temperature exhaust gas. That is, it is preferable that the oxide of the other rare earth metal element is abundantly present in the surface of the complex oxide of the present invention. The other rare earth metal element present in the surface of the complex oxide can improve the heat resistance of the complex oxide and maintain the specific surface area of the complex oxide by suppressing the $CeO_2$ crystal growth that is generated when the complex oxide is exposed to high-temperature exhaust gas. It is considered that the other rare earth metal element present in the surface of the complex oxide acts as a barrier to the $CeO_2$ crystal growth and suppress the $CeO_2$ crystal growth. This effect is considered to be greater for an element with a larger ionic radius, such as lanthanum element.

In cases where the complex oxide of the present invention contains the other rare earth metal element, the percentage by mass of the other rare earth metal element in terms of oxide in the surface of the complex oxide of the present invention is preferably 0.80 times or more, more preferably 0.83 times or more, and still more preferably 0.85 times or more the percentage by mass of the other rare earth metal element in terms of oxide in the whole of the complex oxide of the present invention, from the viewpoint of improving the heat resistance of the complex oxide and maintaining the specific surface area of the complex oxide even when exposed to high-temperature exhaust gas. The upper limit is preferably 3.0 times, more preferably 2.0 times.

The percentage by mass of the other rare earth metal element in terms of oxide in the surface of the complex oxide of the present invention can be measured by X-ray photoelectron spectroscopy. The X-ray photoelectron spectroscopy is preferably performed according to the conditions described in the Examples. The percentage by mass of the other rare earth metal element in terms of oxide in the surface of the complex oxide of the present invention is based on the total mass of the metal elements in terms of oxide in the surface of the complex oxide of the present invention (that is, the total of the percentage by mass of the metal elements in terms of oxide in the surface of the complex oxide of the present invention is 100% by mass). Further, in cases where the complex oxide of the present invention contains two or more kinds of the other rare earth metal elements, the "percentage by mass of the other rare earth metal element in terms of oxide" means the total of the percentage by mass of the two or more kinds of the other rare earth metal elements in terms of oxide.

The percentage by mass of the other rare earth metal element in terms of oxide in the whole of the complex oxide of the present invention can be measured by X-ray fluorescence spectroscopy. The X-ray fluorescence spectroscopy is preferably performed according to the conditions described in the Examples. The percentage by mass of the other rare earth metal element in terms of oxide in the whole of the complex oxide of the present invention is based on the total mass of the metal elements in terms of oxide in the whole of the complex oxide of the present invention (that is, the total percentage by mass of the metal elements in terms of oxide in the whole of the complex oxide of the present invention is 100% by mass). Further, in cases where the complex oxide of the present invention contains two or more kinds of the other rare earth metal elements, the "percentage by mass of the other rare earth metal element in terms of oxide" means the total of the percentage by mass of the two or more kind of the other rare earth metal elements in terms of oxide.

The complex oxide of the present invention can be used as a component of an exhaust gas purification catalyst.

In one embodiment, an exhaust gas purification catalyst contains the complex oxide of the present invention and one kind or two or more kinds of noble metal elements supported on the complex oxide. The amounts of the complex oxide of the present invention and the noble metal element(s) contained in the exhaust gas purification catalyst can be adjusted as appropriate.

The noble metal element(s) can be selected from, for example, palladium, platinum, and rhodium elements, and the like. The noble metal element(s) is/are supported on the complex oxide of the present invention in a form capable of functioning as a catalytically-active component, for example, in the form of a noble metal, an alloy containing the noble metal element, a compound containing the noble metal element (such as oxide of the noble metal element), or the like. It is preferable that the catalytically-active component is in a particle form from the viewpoint of improving exhaust gas purification performance.

The exhaust gas purification catalyst may contain a carrier component for supporting the noble metal element(s). The carrier component is preferably a porous body. The carrier component can be selected from alumina, silica, silica-alumina, alumino-silicates, alumina-zirconia, alumina-chromia, alumina-ceria, and the like.

The exhaust gas purification catalyst may contain other components such as a stabilizer and a binder.

The term "supported" refers to a state in which a noble metal element is physically or chemically adsorbed or retained on the outer surface or on the inner surface of the pores of the complex oxide of the present invention. The fact that a noble metal element is supported by the complex oxide of the present invention can be confirmed, for example, based on the fact that the complex oxide of the present invention and the noble metal element are present in the same region in an element mapping obtained by analyzing a cross-section of the exhaust gas purification catalyst by EDS (energy dispersive spectrometer).

In one embodiment, the exhaust gas purification catalyst is a molded body having a shape such as a pellet. The exhaust gas purification catalyst according to this embodiment can be produced by, for example, drying and calcining an exhaust gas purification catalyst composition. The drying temperature, drying time, calcination temperature, and calcination time can be adjusted as appropriate. The calcination can be carried out, for example, in an air atmosphere.

In another embodiment, the exhaust gas purification catalyst contains a substrate and a catalyst layer formed on the substrate, wherein the catalyst layer contains the complex oxide of the present invention and one kind or two or more kinds of noble metal elements supported on the complex oxide of the present invention.

The substrate can be selected as appropriate from substrates used in known exhaust gas purification catalysts. The material of the substrate can be selected from ceramics such as alumina ($Al_2O_3$), mullite ($3Al_2O_3$-$2SiO_2$), cordierite ($2MgO$-$2Al_2O_3$-$5SiO_2$), aluminum titanate ($Al_2TiO_5$), and silicon carbide (SiC), and metallic materials such as stainless steel. The form of the substrate can be selected from, for example, the form of a honeycomb, pellets, or spheres.

The substrate is preferably a wall-flow type substrate. The wall-flow type substrate includes an inflow-side cell extending in the exhaust gas flow direction, an outflow-side cell extending in the exhaust gas flow direction, and a porous partition wall separating the inflow-side cell and the outflow-side cell. In the inflow-side cell, the end on the exhaust gas inflow side in the exhaust gas flow direction is open, and the end on the exhaust gas outflow side in the exhaust gas flow direction is closed. In the outflow-side cell, the end on the exhaust gas inflow side in the exhaust gas flow direction is closed, and the end on the exhaust gas outflow side in the exhaust gas flow direction is open. The exhaust gas that has flowed into the wall-flow type substrate from the end (opening) on the exhaust gas inflow side of the inflow-side cell passes through the porous partition wall and flows out from the end (opening) on the exhaust gas outflow side of the outflow-side cell. When the exhaust gas passes through the porous partition wall, PM in the exhaust gas is trapped in the pores of the partition wall.

In cases where the substrate is a wall-flow type substrate, the catalyst layer is preferably formed within the porous partition wall of the wall-flow type substrate from the viewpoint of suppressing an increase in pressure-loss.

The catalyst layer can be formed by applying the exhaust gas purification catalyst composition to a substrate, drying and calcining the substrate. The drying temperature, drying time, calcining temperature, and calcining time can be adjusted as appropriate. Calcining may be performed, for example, in an air atmosphere.

The exhaust gas purification catalyst composition used in the production of the exhaust gas purification catalyst is, for example, a slurry containing the complex oxide of the present invention and a salt of a noble metal element. The salt of the noble metal element can be selected from, for example, a nitrate, an ammine complex salt, a chloride, and the like. The solvent contained in the dispersion can be selected from, for example, water, an organic solvent, and the like.

< < Method for Producing Complex Oxide> >

The complex oxide of the present invention can be produced by a method including steps (a) to (f). Steps (a) to (f) will be described below.

Step (a)

Step (a) is a step of preparing a raw material solution containing water, a zirconium salt, a cerium salt, and optionally another rare earth metal salt.

The water contained in the raw material solution is preferably pure water such as ion-exchanged water. The raw material solution may contain a solvent other than water. The solvent other than water can be selected from, for example, organic solvents such as alcohol, acetone, dimethyl sulfoxide, and dimethylformamide. The amount of the organic solvent contained in the raw material solution is not particularly limited as long as the zirconium salt, the cerium salt, and optionally the other rare earth metal salt can be dissolved in the raw material solution, but is usually 20 vol% or less, preferably 10 vol% or less based on the volume of the raw material solution.

The zirconium salt, the cerium salt and the other rare earth metal salt contained in the raw material solution are all water-soluble salts. The present invention also encompasses an embodiment in which the raw material solution prepared in step (a) does not contain the other rare earth metal salt. In the embodiment in which the raw material solution prepared in step (a) does not contain the other rare earth metal salt, "the zirconium salt, the cerium salt, and the other rare earth metal salt are all water-soluble salts" means that both of the cerium salt and the zirconium salt are water-soluble salts.

The solubility of a water-soluble salt in water at 20°C (mass of a water-soluble salt that can be dissolved in 100 g of water at 20°C) is preferably 1.0 g or more, more preferably 2.0 g or more, and still more preferably 5.0 g or more. The solubility of a poorly water-soluble salt in water at 20°C (mass of a poorly water-soluble salt that can be dissolved in 100 g of water at 20°C) is preferably less than 1.0 g, more preferably 0.5 g or less, and still more preferably 0.1 g or less.

The water-soluble zirconium salt can be selected from, for example, zirconium oxychloride, zirconium chloride, zirconium oxynitrate, zirconium nitrate, zirconium oxyacetate, and the like. However, zirconium oxychloride or zirconium chloride is preferable, and zirconium oxychloride is more preferable, from the viewpoint of preventing a decrease in heat resistance of the complex oxide due to contamination of nitrate radical or the like, and from the viewpoint that it is easily available. The raw material solution may contain two or more kinds of water-soluble zirconium salts. The amount of the water-soluble zirconium salt contained in the raw material solution is appropriately adjusted such that the amount of the zirconium element in terms of zirconium oxide contained in the complex oxide produced in step (f) falls within a desired range.

The water-soluble cerium salt can be selected from, for example, cerium chloride, cerium nitrate, cerium sulfate (III), cerium acetate, and the like. However, cerium chloride is preferable from the viewpoint of preventing a decrease in heat resistance of the complex oxide due to contamination of nitrate radical or the like and from the viewpoint that it is easily available. The raw material solution may contain two or more kinds of water-soluble cerium salts. The amount of the water-soluble cerium salt contained in the raw material solution is appropriately adjusted such that the amount of the cerium element in terms of cerium oxide contained in the complex oxide produced in step (f) falls within a desired range.

The other water-soluble rare earth metal salt can be selected, for example, from a chloride, a nitrate, a sulfate, an acetate, and the like of a rare earth metal element other than a cerium element. However, a chloride of a rare earth metal element other than a cerium element (for example, lanthanum chloride, neodymium chloride element, praseodymium chloride, or the like) is preferable from the viewpoint of preventing a decrease in heat resistance of the complex oxide due to contamination of nitrate radical or the like, and from the viewpoint that it is easily available. A sulfate of a rare earth metal element is preferably a sulfate of a trivalent rare earth metal element. The raw material solution may contain two kinds or three or more kinds of the other water-soluble rare earth metal salts. The type and amount of the other water-soluble rare earth metal salt contained in the raw material solution are appropriately adjusted such that the amount of the other rare earth metal element in terms of oxide contained in the complex oxide produced in step (f) falls within a desired range.

Step (b)

Step (b) is a step of adding to the raw material solution prepared in step (a), a first precipitant selected from: an aqueous solution containing a sulfate ion; and a compound that can dissolve in water to produce a sulfate ion, to form a first precipitate containing a zirconium element, thereby obtaining a first slurry containing the first precipitate.

The raw material solution contains metal ions (a zirconium ion, a cerium ion, and optionally another rare earth metal ion) generated by ionization of the water-soluble salts. The first precipitant added to the raw material solution is a precipitant that allows a zirconium ion to be precipitated as basic zirconium sulfate, and is selected from: an aqueous solution containing a sulfate ion; and a compound that can dissolve in water to produce a sulfate ion. The compound that can dissolve in water to produce a sulfate ion can be selected from, for example, ammonium sulfate, sulfuric acid, alkali metal sulfate (for example, sodium sulfate, potassium sulfate, and the like), cerium sulfate (III), rare earth metal sulfate, and the like. However, from the viewpoint of improving the homogeneity of a solid solution phase formed by a cerium element, a zirconium element, and an oxygen element (for example, a solid solution phase composed of cerium oxide and zirconium oxide) and from the viewpoint that it is easily available, ammonium sulfate, sulfuric acid, or alkali metal sulfate is preferable, and ammonium sulfate is more preferable. The rare earth metal sulfate is preferably a trivalent rare earth metal sulfate. The aqueous solution containing a sulfate ion can be obtained, for example, by dissolving in water (for example, pure water such as ion-exchanged water) the compound that can dissolve in water to produce a sulfate ion.

When the first precipitant is added to the raw material solution, a first precipitate containing a zirconium element is formed, and thus a first slurry containing the first precipitate is obtained. A zirconium element is contained in the first precipitate in the form of basic zirconium sulfate. The basic zirconium sulfate is a poorly water-soluble zirconium salt formed by the first precipitant.

The temperature of the raw material solution when adding the first precipitant is preferably 70°C or more and 100°C or less, more preferably 80°C or more and 100°C or less, and still more preferably 85°C or more and 100°C or less, from the viewpoint of suppressing the generation of aggregated particles due to delay of the formation reaction of the basic zirconium sulfate.

It is preferable to add the first precipitant to the raw material solution such that the molar quantity of a sulfate ion in the raw material solution is 0.4 times or more and 2 times or less the molar quantity of a zirconium element in the raw material solution, from the viewpoint of allowing the basic zirconium sulfate to be sufficiently precipitated and suppressing the adverse effect of an excessive amount of a sulfate ion so as to improve the heat resistance of the complex oxide produced in step (f). The molar quantity of the sulfate ion in the raw material solution is more preferably 0.45 times or more and 2 times or less, and still more preferably 0.5 times or more and 1.5 times or less the molar quantity of the zirconium element in the raw material solution.

From the viewpoint of uniformly forming the precipitate, it is preferable to add the first precipitant dropwise to the raw material solution while stirring the raw material solution.

From the viewpoint of uniformly aging the precipitate, it is preferable to age the first precipitate while stirring the first slurry. The aging time is preferably 0.5 hours or more and 12 hours or less, more preferably 1 hour or more and 4 hours or less, and still more preferably 1 hour or more and 2 hours or less.

Step (c)

Step (c) is a step of subjecting the first slurry obtained in step (b) to a wet grinding treatment.

By subjecting the first slurry to the wet grinding treatment, the first precipitate contained in the first slurry is ground to obtain a ground product of the first precipitate.

From the viewpoint of effectively achieving desired $D_{50}$ and $D_{90}$ in the complex oxide produced in step (f), the wet grinding treatment is preferably performed such that the $D_{50}$ of the ground product of the first precipitate is 0.5 $\mu$m or more and 1.5 $\mu$m or less. The $D_{50}$ of the ground product of the first precipitate is more preferably 0.5 $\mu$m or more and 1.3 $\mu$m or less, and still more preferably 0.5 $\mu$m or more and 1.2 $\mu$m or less. The $D_{50}$ of the first precipitate before the wet grinding treatment is usually 10 $\mu$m or more and 40 $\mu$m or less, preferably 10 $\mu$m or more and 30 $\mu$m or less.

From the viewpoint of effectively achieving desired $D_{50}$ and $D_{90}$ in the complex oxide produced in step (f), the ratio of the $D_{50}$ of the ground product of the first precipitates to the $D_{50}$ of the first precipitate before the wet grinding treatment is preferably 0.02 or more and 0.12 or less, more preferably 0.02 or more and 0.1 or less, and still more preferably 0.03 or more and 0.08 or less.

From the viewpoint of effectively achieving desired $D_{50}$ and $D_{90}$ in the complex oxide produced in step (f), the wet grinding treatment is preferably performed such that the $D_{90}$ of the ground product of the first precipitate is 1 $\mu$m or more and 2.5 $\mu$m or less. The $D_{90}$ of the ground product of the first precipitate is more preferably 1 $\mu$m or more and 2.3 $\mu$m or less, and still more preferably 1 $\mu$m or more and 2 $\mu$m or less. The $D_{90}$ of the first precipitate before the wet grinding treatment is usually 10 $\mu$m or more and 100 $\mu$m or less, preferably 20 $\mu$m or more and 50 $\mu$m or less.

From the viewpoint of effectively achieving desired $D_{50}$ and $D_{90}$ in the complex oxide produced in step (f), the ratio of the $D_{90}$ of the ground product of the first precipitates to the $D_{90}$ of the first precipitate before the wet grinding treatment is preferably 0.02 or more and 0.12 or less, more preferably 0.02 or more and 0.1 or less, and still more preferably 0.03 or more and 0.09 or less.

The $D_{50}$ and $D_{90}$ of the ground product of the first precipitate are particle sizes at which the cumulative volumes reach 50% and 90%, respectively, in the volume-based particle size distribution of the ground product of the first precipitate obtained by the laser diffraction scattering particle size distribution measurement method. The laser diffraction scattering particle size distribution measurement method is preferably performed according to the conditions described in the Examples. The same applies to the $D_{50}$ and the $D_{90}$ of the first precipitate before the wet grinding treatment.

From the viewpoint of effectively achieving desired $D_{50}$ and $D_{90}$ in the ground product of the first precipitate, the wet grinding treatment is preferably performed using beads. The diameter of the beads is usually 0.015 mm or more and 2.0 mm or less. From the viewpoint of effectively achieving desired $D_{50}$ and $D_{90}$ in the ground product of the first precipitate, the diameter of the beads is preferably 0.3 mm or less, more preferably 0.1 mm or less. The lower limit is preferably 0.01 mm or more, more preferably 0.03 mm or more.

From the viewpoint of effectively achieving desired $D_{50}$ and $D_{90}$ in the ground product of the first precipitate, the wet grinding treatment is preferably performed such that the acceleration applied to the beads exceeds 1 G. The acceleration applied to the beads is usually 2 G or more and 1000 G or less, preferably 40 G or more and 1000 G or less. A desired acceleration can be applied to the beads by, for example, a centrifugal force generated by high-speed rotation of a paint shaker, which is a coating material dispersing machine.

From the viewpoint of effectively achieving desired $D_{50}$ and $D_{90}$ in the ground product of the first precipitate, the wet grinding treatment using beads is preferably performed for 0.5 hours or more, and more preferably performed for 1 hour or more. The upper limit is preferably 10 hours, more preferably 5 hours.

In step (c), the first slurry obtained in step (b) may be directly used for the wet grinding treatment, or the first slurry obtained in step (b) may be diluted and then used for the wet grinding treatment. Dilution can be performed using a solvent such as water (for example, pure water such as ion-exchanged water) or a solvent other than water (for example, organic solvent). Specific examples of the organic solvent are the same as those described above.

Step (d)

Step (d) is a step of adding to the first slurry after the wet grinding treatment, a second precipitant selected from: an aqueous solution containing a hydroxide ion; and a compound that can dissolve in water to produce a hydroxide ion, to form a second precipitate containing a zirconium element, a cerium element, and optionally another rare earth metal element, thereby obtaining a second slurry containing the second precipitate.

By adding the second precipitant to the first slurry after the wet grinding treatment, a second precipitate containing a zirconium element, a cerium element, and optionally another rare earth metal element is formed, and thus a second slurry containing the second precipitate is obtained. The pH of the second slurry is usually 9 or more and 14 or less, preferably 11 or more and 14 or less.

A zirconium element is contained in the second precipitate in the form of zirconium hydroxide. The zirconium hydroxide is a poorly water-soluble zirconium salt formed by the second precipitant. The basic zirconium sulfate formed by the first precipitant is converted into zirconium hydroxide by the second precipitant.

A cerium element is contained in the second precipitate in the form of cerium hydroxide. The cerium hydroxide is a poorly water-soluble cerium salt formed by the second precipitant.

The other rare earth metal element (for example, lanthanum element, neodymium element, praseodymium element, or the like) is contained in the second precipitate in the form of a hydroxide (for example, lanthanum hydroxide, neodymium hydroxide, praseodymium hydroxide, or the like). The hydroxide of the other rare earth metal element is a poorly water-soluble rare earth metal salt formed by the second precipitant. The hydroxide of the other rare earth metal element formed by the second precipitant is coprecipitated with the cerium hydroxide formed by the second precipitant.

The second precipitate contains complex salt particles containing zirconium hydroxide, cerium hydroxide, and optionally a hydroxide of the other rare earth metal element. The second precipitate may contain, in addition to the complex salt particles, zirconium hydroxide particles, cerium hydroxide particles, hydroxide particles of the other rare earth metal element, and the like. The complex salt particles are formed, for example, by allowing cerium hydroxide and/or a hydroxide of the other rare earth metal element formed by the second precipitant to adhere to and grow on the surface of basic zirconium sulfate formed by the first precipitant (the basic zirconium sulfate is converted into zirconium hydroxide by the second precipitant).

From the viewpoint of suppressing a decrease in oxygen storage capacity due to phase separation of cerium oxide and zirconium oxide in the complex oxide produced in step (f), the temperature of the first slurry when the second precipitant is added is preferably 35°C or more and 60°C or less, more preferably 35°C or more and 55°C or less, and still more preferably 35°C or more and 45°C or less.

It is preferable to add the second precipitant to the first slurry such that the molar quantity of a hydroxide ion in the first slurry is 2 times or more the molar quantity of an oxygen element that is required to allow each of a zirconium element, a cerium element, and another rare earth metal element in the first slurry to become oxide, from the viewpoint of allowing zirconium hydroxide, cerium hydroxide, and a hydroxide of the other rare earth metal element to be sufficiently precipitated. The molar quantity of the hydroxide ion in the first slurry is more preferably 2 times or more and 10 times or less, still more preferably 2 times or more and 5 times or less, and still more preferably 2 times or more and 3 times or less the molar quantity of the oxygen element that is required to allow each of the zirconium element, the cerium element, and the other rare earth metal element in the first slurry to become oxide.

The molar quantity of the oxygen element that is required to allow each of the zirconium element, the cerium element, and the other rare earth metal element in the first slurry to become oxide can be determined by [(molar quantity of zirconium element) $\times$ 2] + [(molar quantity of cerium element) $\times$ 2] + [(molar quantity of rare earth metal element other than cerium element, praseodymium element, and terbium element) $\times$ 3/2] + [(molar quantity of praseodymium element) $\times$ 11/6] + [(molar quantity of terbium element) $\times$ 7/4].

Step (e)

Step (e) is a step of obtaining a cake from the second slurry.

The cake can be obtained by subjecting the second slurry to a solid-liquid separation method. Examples of the solid-liquid separation method include filtration, centrifugation, decantation, and the like, and among these, filtration is preferable. Although the cake is obtained by removing the solvent by the solid-liquid separation method, the solvent is not completely removed, and thus the solvent remains in the cake.

In step (e), it is preferable to obtain a first cake from the second slurry, and treat the first cake with an alcohol-containing liquid to obtain a second cake having an alcohol concentration of 90 vol% or more. Thereby, aggregation of the second precipitate contained in the cake can be suppressed, and desired $D_{50}$ and $D_{90}$ can be effectively achieved in the complex oxide produced in step (f).

The first cake can be obtained by subjecting the second slurry to a solid-liquid separation method. The descriptions of the solid-liquid separation method are the same as described above.

Before treating the first cake with an alcohol-containing solution, the first cake may be washed with a washing liquid. Water (for example, pure water such as ion-exchanged water) is preferably used as the washing liquid. By washing the first cake with the washing liquid, a part or the entirety of the solvent in the first cake is replaced with the washing liquid.

The alcohol-containing liquid contains one kind or two or more kinds of alcohols. Examples of the alcohol include methyl alcohol, ethyl alcohol, n-propyl alcohol, 2-propanol, 1-propanol, n-butyl alcohol, s-butyl alcohol, t-butyl alcohol, pentyl alcohol, hexyl alcohol and the like. Among these, methyl alcohol, ethyl alcohol, n-propyl alcohol, 2-propanol, 1-propanol and the like are preferred, and methyl alcohol, ethyl alcohol, n-propyl alcohol and the like are more preferred. When the alcohol-containing liquid contains one kind of alcohol, the one kind of alcohol is preferably ethyl alcohol; and when the alcohol-containing liquid contains two or more kinds of alcohols, the two or more kinds of alcohols are preferably ethyl alcohol and one kind or two or more kinds of other alcohols.

The alcohol concentration in the alcohol-containing liquid is adjusted as appropriate, depending on the alcohol concentration in the second cake that should be achieved. The alcohol concentration in the alcohol-containing liquid is required to be equal to or higher than the alcohol concentration in the second cake that should be achieved. Therefore, the alcohol concentration in the alcohol-containing liquid may be the same as the alcohol concentration in the second cake that should be achieved, or may be higher than the alcohol concentration in the second cake that should be achieved. The upper limit value of the alcohol concentration in the alcohol-containing liquid is not particularly limited. When the alcohol-containing liquid contains two or more kinds of alcohols, the "alcohol concentration in the alcohol-containing liquid" means the total concentration of the two or more kinds of alcohols.

When the alcohol-containing liquid contains ethyl alcohol, the ethyl alcohol concentration is preferably 51% by volume or more, more preferably 65% by volume or more, and still more preferably 90% by volume or more, based on the volume of the alcohol-containing liquid. The upper limit value of the ethyl alcohol concentration is usually 100% by volume, but not particularly limited thereto.

The alcohol-containing liquid may contain one kind or two or more kinds of components other than the alcohol. Examples of the component other than the alcohol include water, ketones (such as acetone, methyl ethyl ketone (MEK), cyclohexanone, methyl isobutyl ketone, diacetone alcohol, cycloheptanone and diethyl ketone), ethers (such as 1,4-dioxane, dioxolane, diisopropyl ether dioxane and tetrahydrofuran), aliphatic hydrocarbons (such as hexane), alicyclic hydrocarbons (such as cyclohexane), aromatic hydrocarbons (such as toluene and xylene), halogenated carbons (such as dichloromethane and dichloroethane), esters (such as methyl formate, methyl acetate, ethyl acetate, propyl acetate, butyl acetate and ethyl lactate), cellosolves (such as methyl cellosolve, ethyl cellosolve and butyl cellosolve), cellosolve acetates, sulfoxides (such as dimethyl sulfoxide), amides (such as dimethylformamide and dimethylacetamide) and the like.

As the alcohol-containing liquid, it is possible to use, for example, a commercially available denatured alcohol (industrial alcohol) as it is, or diluted with water such as ion exchanged water.

The treatment of the first cake with the alcohol-containing liquid is not particularly limited as long as the first cake can be brought into contact with the alcohol-containing liquid to replace the liquid in the first cake (such as the solvent in the raw material solution, or the washing liquid) with the alcohol-containing liquid. The treatment can be carried out, for example, by a method of immersing the first cake in the alcohol-containing liquid, a method of mixing the first cake and the alcohol-containing liquid, or the like. The second cake can be obtained by subjecting the first cake after being brought into contact with the alcohol-containing liquid (for example, after dipping the first cake in the alcohol-containing liquid, or after mixing the first cake and the alcohol-containing liquid), to solid-liquid separation. The solid-liquid separation can be carried out, for example, by a method such as filtration, centrifugation, decantation or the like. Among these, centrifugation is preferred. The solid-liquid separation removes the alcohol-containing liquid and enables to obtain the second cake. However, the alcohol-containing liquid cannot be removed completely, and thus, the second cake contains the remaining alcohol-containing liquid. By carrying out the treatment of the first cake with the alcohol-containing liquid repeatedly, the alcohol concentration in the second cake gets closer to, and finally coincides with, the alcohol concentration in the alcohol-containing liquid. Therefore, in cases where the alcohol concentration in the alcohol-containing liquid is the same as the alcohol concentration in the second cake that should be achieved, the treatment of the first cake with the alcohol-containing liquid is carried out repeatedly until the alcohol concentration in the second cake coincides with the alcohol concentration in the alcohol-containing liquid. On the other hand, in cases where the alcohol concentration in the alcohol-containing liquid is higher than the alcohol concentration in the second cake that should be achieved, the treatment of the first cake with the alcohol-containing liquid is carried out repeatedly until the alcohol concentration in the second cake reaches the target alcohol concentration.

From the viewpoint of effectively achieving desired $D_{50}$ and $D_{90}$ in the complex oxide produced in step (f), the alcohol concentration of the second cake is preferably 90 vol% or more, more preferably 95 vol% or more, and still more preferably 99 vol% or more. The upper limit is 100 vol%.

The alcohol concentration in the second cake is defined by the alcohol concentration in the alcohol-containing liquid after being used in the treatment of the first cake. Specifically, after bringing the first cake into contact with the alcohol-containing liquid (for example, after dipping the first cake in the alcohol-containing liquid, or after mixing the first cake and the alcohol-containing liquid), the alcohol concentration in the filtrate, the supernatant or the discharged liquid obtained by solid-liquid separation is measured, and the measured alcohol concentration in the filtrate, the supernatant or the discharged liquid is defined as the alcohol concentration in the second cake.

The alcohol concentration can be measured in accordance with a conventional method. For example, the alcohol concentration in the alcohol-containing liquid can be determined by: preparing a conversion table between alcohol concentrations in the alcohol-containing liquids and the corresponding specific gravities of the alcohol-containing liquids, in advance; measuring the specific gravity of the alcohol-containing liquid of interest; and calculating the alcohol concentration in the alcohol-containing liquid based on the measured specific gravity. The specific gravity of the alcohol-containing liquid can be measured, for example, by a float type hydrometer. The specific gravity of the alcohol-containing liquid is measured, for example, at a temperature of 15°C. Regarding the measurement of the specific gravity and the conversion of the specific gravity to the alcohol concentration, it is possible to refer to JIS B 7548: 2009 (Alcohol hydrometers - Metrological and technical requirements and tests), Annex A (Regulations) "International alcoholometric tables".

The second cake is preferably dried before subjecting the second cake to step (f). The drying can be carried out in accordance with a conventional method. The drying temperature is usually 60°C or higher and 200°C or lower, and preferably 80°C or higher and 130°C or lower; and the drying time is usually 1 hour or more and 24 hours or less, and preferably 2 hours or more and 12 hours or less.

Step (f)

Step (f) is a step of calcining the cake obtained in step (e) to produce a complex oxide containing a zirconium element, a cerium element, and optionally another rare earth metal element.

In cases where, in step (e), the first cake is obtained from the second slurry, the first cake is treated with the alcohol-containing liquid, and the second cake having an alcohol concentration of 90 vol% or more is obtained, the second cake is calcined in step (f).

The calcination of the precipitate can be carried out in accordance with a conventional method. The calcination is usually carried out in an air atmosphere. The calcination temperature is usually 600°C or higher and 1100°C or lower, preferably 600°C or higher and 1000°C or lower, and more preferably 600°C or higher and 950°C or lower. The calcination time is usually 2 hours or more and 20 hours or less, preferably 2 hours or more and 10 hours or less, and more preferably 2 hours or more and 5 hours or less.

In step (c), the first slurry is subjected to the wet grinding treatment, whereby the first precipitate (basic zirconium sulfate) is ground to fine particles. In step (d), by adding the second precipitant to the first slurry after the wet grinding treatment, cerium hydroxide and optionally a hydroxide of another rare earth metal element are allowed to be precipitated around the ground product of the first precipitate as a nucleus (however, the basic zirconium sulfate is converted into zirconium hydroxide by the second precipitant). The second precipitate thus obtained has a sufficiently reduced particle size. Therefore, in step (f), a complex oxide having desired $D_{50}$ and $D_{90}$ can be produced. In particular, by obtaining the first cake from the second slurry, treating the first cake with the alcohol-containing liquid to obtain the second cake having an alcohol concentration of 90 vol% or more in step (e), and calcining the second cake in step (f), the aggregation of the second precipitate contained in the cake can be suppressed, and the desired $D_{50}$ and $D_{90}$ can be effectively achieved in the complex oxide produced in step (f).

In cases where the raw material solution contains another rare earth metal salt, by adding the second precipitant to the first slurry after the wet grinding treatment in step (d), cerium hydroxide and optionally a hydroxide of the other rare earth metal element are allowed to be precipitated around the ground product of the first precipitate as a nucleus (however, the basic zirconium sulfate is converted into zirconium hydroxide by the second precipitant). Therefore, in the complex oxide obtained in step (f), the percentage by mass of the other rare earth metal element in terms of oxide in the surface of the complex oxide is larger than the percentage by mass of the other rare earth metal element in terms of oxide in the whole of the complex oxide. That is, the oxide of the other rare earth metal element is abundantly present in the surface of the complex oxide. The other rare earth metal element present in the surface of the complex oxide can improve the heat resistance of the complex oxide and maintain the specific surface area of the complex oxide by suppressing the $CeO_2$ crystal growth that occurs when the complex oxide is exposed to high-temperature exhaust gas. It is considered that the other rare earth metal element present in the surface of the complex oxide acts as a barrier to the $CeO_2$ crystal growth and suppress the $CeO_2$ crystal growth. This effect is considered to be greater for an element with a larger ionic radius, such as lanthanum element.

The complex oxide obtained in step (f) may be subjected to grinding treatment, as necessary. The grinding treatment can be performed by a dry method or a wet method using, for example, a mortar, a hammer mill, a ball mill, a bead mill, a jet mill, a roller mill, or the like.

However, when volume grinding is performed on the complex oxide obtained in step (f) by using a grinding mill having a grinding mechanism of "compression" or "impact", in general, there is a concern that the particles may be broken into several lumps not from the surface of the particles but from the entire particles. For this reason, the volume grinding is not preferable as a fine grinding treatment, and it is difficult to obtain a complex oxide having a $D_{50}$ and a $D_{90}$ of 0.50 $\mu$m or less and 1.0 $\mu$m or less, respectively, as the product of the present invention. Examples of the grinding mill having a grinding mechanism of "compression" or "impact" include a hammer mill, a pin mill, a dry ball mill, and the like.

On the other hand, when the complex oxide obtained in step (f) is subjected to surface grinding using a grinding mill having a grinding mechanism of "frictional crushing" or "shearing", a compressive force or a shearing force is frictionally applied to the particles, and a fine powder is formed from the particle surface. For this reason, the surface grinding is generally suitable as a fine grinding treatment and is thus preferable. Examples of the grinding mill having a grinding mechanism of "frictional crushing" include a bead mill a force mill, and the like. In cases where the complex oxide obtained in step (f) is subjected to a grinding treatment, it is preferable to perform surface grinding with these grinding mills from the viewpoint that the $D_{50}$ and the $D_{90}$ of the ground product of the complex oxide can be more easily controlled.

Examples

The present invention will be described in further detail below based on Examples and Comparative Examples.

[Measurement of $D_{50}$ and $D_{90}$]

The $D_{50}$ and $D_{90}$ of the target powder are particle sizes at which the cumulative volumes reach 50% and 90%, respectively, in the volume-based particle size distribution of the target powder as measured by the laser diffraction scattering particle size distribution measurement. The laser diffraction scattering particle size distribution was measured by dispersing the target powder in a 0.2% by mass aqueous solution of sodium hexametaphosphate, subjecting the dispersion to ultrasonic treatment (power: 30 W, treatment time: 360 seconds), and then using a laser diffraction scattering particle size distribution analyzer (manufactured by MicrotracBEL Corporation, Microtrac MT3000II). The measurement conditions were as follows: particle refractive index: 1.81, particle shape: non-spherical, solvent refractive index: 1.33, set zero: 30 seconds, measurement time: 60 seconds, and measurement range: 0.01 to 10,000 $\mu$m.

[Measurement of Specific Surface Area]

The specific surface area was measured according to "(3.5) one point method" in "6.2 Flow method" of JIS R 1626:1996 "Methods for measuring the specific surface area of fine ceramic powders by gas adsorption using the BET method." Specifically, a nitrogen-helium mixture gas containing 30% by volume of nitrogen as an adsorption gas and 70% by volume of helium as a career gas was used as a gas, and a full automatic specific surface area meter Macsorb model-1201, manufactured by Mountech Co., Ltd., was used as a BET specific surface area measuring device, and the measurement was performed by a BET one point method.

[Bulk Composition Analysis of Complex Oxide]

The bulk composition analysis of the complex oxides was performed using X-ray fluorescence spectroscopy (XRF).
The conditions for the XRF analysis were as follows.

XRF analyzer: ZSX PrimusII manufactured by Rigaku
Accelerating voltage: 50 kV
Current: 50 mA
Atmosphere: vacuum 1.4 Pa
Target: Rh 4.0 kW
Filter: Ni400
Diaphragm: 30 mm
Slit: S2
Dispersive crystal: LiF (200)
Detector: SC
Attenuator: 1/1
PHA: L.L. 50, U.L. 400
PR gas: 4.7 mL/min
Constant temperature: 36.5°C

[Surface Composition Analysis of Complex Oxide]

The surface composition analysis of the complex oxide was performed using X-ray photoelectron spectroscopy (XPS).

The conditions for the XPS analysis were as follows.

XPS analyzer: PHI Quantes manufactured by ULVAC-Phi, Inc.
Excitation X-ray: monochromatic Al-Kα ray (1486.7 eV)
Output: 50 W
Accelerating voltage: 15 kV
X-ray irradiation diameter: 200 $\mu m\varphi$
Measurement area: $1000 \times 300 \ \mu m^2$
Detection angle: 15°
Pass energy: 26.0 eV
Energy step: 0.1 eV/step
Measured elements/orbitals (semi-quantitative calculation elements): C 1s, O 1s, Zr 3d, La 3d5/2, Ce 3d, Pr 3d5/2, Nd 3d5/2

The XPS data was analyzed using data analysis software (MultiPak Ver. 9.9, manufactured by ULVAC-Phi, Inc.). Iterated Shirley was used as background mode.

[Calculation of Degree of Deviation of Surface Composition from Bulk Composition]

A cerium-zirconium complex oxide prepared by the following method was used as a reference sample in calculating the degree of deviation of the surface composition from the bulk composition.

Cerium nitrate, zirconium oxynitrate, lanthanum nitrate, neodymium nitrate, and praseodymium nitrate were dissolved in water to obtain 500 g of a raw material solution. The amounts of cerium nitrate, zirconium oxynitrate, lanthanum nitrate, neodymium nitrate, and praseodymium nitrate were adjusted such that the mass of cerium element in terms of cerium oxide, the mass of zirconium element in terms of zirconium oxide, the mass of lanthanum element in terms of lanthanum oxide, the mass of neodymium element in terms of neodymium oxide, and the mass of praseodymium element in terms of praseodymium oxide were 40% by mass, 50% by mass, 2% by mass, 4% by mass, and 4% by mass, respectively, based on the total mass of these.

The temperature of 10% by mass aqueous ammonia was raised to 40°C, and the raw material solution was added dropwise while stirring. The raw material solution was added dropwise until the pH of the aqueous ammonia fell below 9.5 to form a precipitate, and the precipitate was filtered and washed by suction filtration to obtain a cake.

The cake was air-dried, then dried at 90°C overnight, and calcined in a muffle furnace. After the calcination, the product was ground to obtain a powdery complex oxide, which was used as a reference sample.

The reference sample was subjected to bulk compositional analysis by XRF and surface composition analysis by XPS by the methods described above. The results are shown in Tables 2 to 3. In Table 2, "CeO$_2$," "ZrO$_2$," "La$_2$O$_3$," "Nd$_2$O$_3$", and "Pr$_6$O$_{11}$" represent the XRF analysis values of cerium element, zirconium element, lanthanum element, neodymium element, and praseodymium element, respectively, in terms of oxide. In Table 3, "CeO$_2$," "ZrO$_2$," "La$_2$O$_3$," "Nd$_2$O$_3$", and "Pr$_6$O$_{11}$" represent the XPS analysis values (semi-quantitative values) of cerium element, zirconium element, lanthanum element, neodymium element, and praseodymium element, respectively, in terms of oxide.

Based on the following formulas, the correction coefficient C1 for the XPS analysis value of cerium element in terms of cerium oxide, the correction coefficient C2 for the XPS analysis value of zirconium element in terms of zirconium oxide, the correction coefficient C3 for the XPS analysis value of lanthanum element in terms of lanthanum oxide, the correction coefficient C4 for the XPS analysis value of neodymium element in terms of neodymium oxide, and the correction coefficient C5 for the XPS analysis value of praseodymium element in terms of praseodymium oxide were calculated. The correction coefficients are shown in Table 4.

Correction coefficient C1 = XRF analysis value of cerium element in terms of cerium oxide in reference sample / XPS analysis value of cerium element in terms of cerium oxide in reference sample

Correction coefficient C2 = XRF analysis value of zirconium element in terms of zirconium oxide in reference sample / XPS analysis value of zirconium element in terms of zirconium oxide in reference sample

Correction coefficient C3 = XRF analysis value of lanthanum element in terms of lanthanum oxide in reference sample / XPS analysis value of lanthanum element in terms of lanthanum oxide in reference sample

Correction coefficient C4 = XRF analysis value of neodymium element in terms of neodymium oxide in reference sample / XPS analysis value of neodymium element in terms of neodymium oxide in reference sample

Correction coefficient C5 = XRF analysis value of praseodymium element in terms of praseodymium oxide in reference sample / XPS analysis value of praseodymium element in terms of praseodymium oxide in reference sample

With respect to each of the complex oxides of Examples and Comparative Examples, a value V1 obtained by multiplying the XPS measurement value of cerium element in terms of cerium oxide by the correction coefficient C1, a value V2 obtained by multiplying the XPS measurement value of zirconium element in terms of zirconium oxide by the correction coefficient C2, a value V3 obtained by multiplying the XPS measurement value of lanthanum element in terms of lanthanum oxide by the correction coefficient C3, a value V4 obtained by multiplying the XPS measurement value of neodymium element in terms of neodymium oxide by the correction coefficient C4, and a value V5 obtained by multiplying the XPS measurement value of praseodymium element in terms of praseodymium oxide by the correction coefficient C5 were calculated, and based on the following formulas, the correction value CV1 of the XPS analysis value of cerium element in terms of cerium oxide, the correction value CV2 of the XPS analysis value of zirconium element in terms of zirconium oxide, the correction value CV3 of the XPS analysis value of lanthanum element in terms of lanthanum oxide, the correction value CV4 of the XPS analysis value of neodymium element in terms of neodymium oxide, and the correction value CV5 of the XPS analysis value of praseodymium element in terms of praseodymium oxide were calculated.

$$\text{Correction value CV1} = \text{value V1} \times 100 \,/\, (\text{total value of values V1 to V5})$$

$$\text{Correction value CV2} = \text{value V2} \times 100 \,/\, (\text{total value of values V1 to V5})$$

$$\text{Correction value CV3} = \text{value V3} \times 100 \,/\, (\text{total value of values V1 to V5})$$

$$\text{Correction value CV4} = \text{value V4} \times 100 \,/\, (\text{total value of values V1 to V5})$$

$$\text{Correction value CV5} = \text{value V5} \times 100 \,/\, (\text{total value of values V1 to V5})$$

With respect to each of the complex oxides of Examples and Comparative Examples, the degree of deviation of the surface composition from the bulk composition was calculated based on the following formula, and this value was used as an index of the surface concentration of lanthanum element, neodymium element, and praseodymium element in each complex oxide.

Degree of deviation of surface composition from bulk composition = (correction value CV3 + correction value CV4 + correction value CV5) / (XRF analysis value of lanthanum element in terms of lanthanum oxide + XRF analysis value of neodymium element in terms of neodymium oxide + XRF analysis value of praseodymium element in terms of praseodymium oxide)

[Example 1]

(1) Preparation of First Slurry

Cerium chloride, zirconium oxychloride, lanthanum chloride, neodymium chloride, and praseodymium chloride were dissolved in water to obtain 480 g of a raw material solution. Ion-exchanged water was used as the water (the same applies hereinafter). The amounts of cerium chloride, zirconium oxychloride, lanthanum chloride, neodymium chloride, and praseodymium chloride were adjusted such that the mass of cerium element in terms of cerium oxide, the mass of zirconium element in terms of zirconium oxide, the mass of lanthanum element in terms of lanthanum oxide, the mass of neodymium element in terms of neodymium oxide, and the mass of praseodymium element in terms of praseodymium oxide were 40% by mass, 50% by mass, 2% by mass, 4% by mass, and 4% by mass, respectively, based on the total mass of these.

The temperature of the raw material solution was raised to 85°C, and a 25% by mass aqueous solution of ammonium sulfate was added dropwise to the raw material solution with stirring such that the molar quantity of a sulfate ion was 0.5 times the molar quantity of a zirconium element to form a precipitate, thereby obtaining a first slurry. After the dropwise addition was completed, the precipitate was aged at 85°C while stirring the first slurry.

(2) Wet Grinding Treatment for First Slurry

After aging the precipitate, the first slurry was cooled to 40°C. After cooling, the first slurry was added to a 1 L polyethylene vessel filled with 300 g of $ZrO_2$ beads with a diameter of 0.1 mm, and the first slurry was subjected to a wet grinding treatment at room temperature for 1 hour using a paint shaker (Paint Shaker PS-08, manufactured by Asada Iron Works Co., Ltd.). In the wet grinding treatment, centrifugal force generated by high-speed rotation of the paint shaker applies acceleration exceeding 1 G (usually 50 G or more and 500 G or less) to the beads, and the beads grind the precipitate.

(3) Measurement of $D_{50}$ and $D_{90}$

Using the first slurry before the grinding treatment or after the grinding treatment, the $D_{50}$ and $D_{90}$ of the precipitate before the grinding treatment or after the grinding treatment were measured by the method described above. The results are shown in Table 1.

(4) Preparation of Second Slurry

The first slurry after the grinding treatment was transferred to a beaker, heated to 40°C with stirring, and then a 24% by mass aqueous solution of sodium hydroxide was added dropwise such that the molar quantity of a hydroxide ion was 2.5 times the molar quantity of an oxygen element that is required to allow each of a cerium element, a zirconium element, a lanthanum element, a neodymium element and a praseodymium element to become oxide, to form a precipitate, thereby obtaining a second slurry. The pH of the second slurry was 13.5. After the dropwise addition was completed, the precipitate was aged at 40°C while stirring the second slurry.

(5) Preparation of First Cake

After aging of the precipitate, the second slurry was filtered and washed using ion-exchanged water to obtain a first cake.

(6) Preparation of Second Cake

As a denatured alcohol, CS Solve NM-85 manufactured by Chusei Oil Co., Ltd. was used. The composition of the denatured alcohol used was 85.4% by mass of ethyl alcohol, 5% by mass of methyl alcohol, and 9.6% by mass of n-propyl alcohol.

Using the denatured alcohol and ion-exchanged water, alcohol-containing liquids having different alcohol concentrations (volume percentage concentration) were prepared, the specific gravities (15/15°C) of the respective alcohol-containing liquids were measured by a hydrometer pycnometer, and a conversion table between the specific gravities (15/15°C) and the alcohol concentrations (vol%) was prepared.

After washing, 20 g of the first cake was treated with the denatured alcohol to replace the water in the first cake with the denatured alcohol. Specifically, the first cake was suspended in the denatured alcohol and then centrifuged (8000 rpm × 5 minutes), and the specific gravity (15°C/15°C) of the supernatant was measured with a hydrometer pycnometer. Using the conversion table between the specific gravities (15°C/15°C) and the alcohol concentrations (vol%), the alcohol concentration of the supernatant was calculated from the specific gravity of the supernatant. The alcohol concentration of the supernatant was defined as the alcohol concentration of the cake. The above treatment was repeated three times until the alcohol concentration of the supernatant (that is, the alcohol concentration of the cake) reached 99 vol%, to obtain a second cake having an alcohol concentration of 99 vol%.

(7) Preparation of Complex Oxide

The second cake was air-dried, then dried at 90°C overnight, and calcined in a muffle furnace. After the calcination, the calcined product was ground with a hand mixer (Force Mill FM-1, manufactured by Osaka Chemical Co., Ltd.) and then sieved in a 100 mesh to obtain a powdery complex oxide.

(8) Characteristic Measurement of Complex Oxide

[Measurement of $D_{50}$ and $D_{90}$]

The $D_{50}$ and $D_{90}$ of the complex oxide obtained in (7) above were measured by the method described above. The results are shown in Table 1.

[Measurement of Specific Surface Area]

The complex oxide obtained in (7) above was heat-treated at 1000°C for 3 hours in an air atmosphere, and then the specific surface area of the complex oxide after heat treatment was measured by the method described above. The results are shown in Table 1.

[Bulk Composition Analysis]

The complex oxide obtained in (7) above was subjected to bulk composition analysis by XRF in accordance with the method described above. The results are shown in Table 2. In Table 2, "$CeO_2$," "$ZrO_2$," "$La_2O_3$," "$Nd_2O_3$", and "$Pr_6O_{11}$" represent the XRF analysis values of cerium element, zirconium element, lanthanum element, neodymium element, and praseodymium element, respectively, in terms of oxide.

[Example 2]

A complex oxide was prepared in the same manner as in Example 1, except that the amounts of cerium chloride, zirconium oxychloride, lanthanum chloride, neodymium chloride, and praseodymium chloride were adjusted such that the mass of cerium element in terms of cerium oxide, the mass of zirconium element in terms of zirconium oxide, the mass of lanthanum element in terms of lanthanum oxide, the mass of neodymium element in terms of neodymium oxide, and the mass of praseodymium element in terms of praseodymium oxide were 40% by mass, 46% by mass, 2% by mass, 8% by mass, and 4% by mass, respectively, based on the total mass of these.
The complex oxide obtained in Example 2 was subjected to measurement of $D_{50}$ and $D_{90}$, measurement of specific surface area, and bulk composition analysis by XRF in the same manner as in Example 1. The results are shown in Tables 1 to 2.

[Surface Composition Analysis]

The complex oxide obtained in Example 2 was subjected to surface composition analysis by XPS in accordance with the method described above. The results are shown in Table 3. In Table 3, "$CeO_2$," "$ZrO_2$," "$La_2O_3$," "$Nd_2O_3$", and "$Pr_6O_{11}$" represent the XPS analysis values (semi-quantitative values) of cerium element, zirconium element, lanthanum element, neodymium element, and praseodymium element, respectively, in terms of oxide.

[Calculation of Degree of Deviation of Surface Composition from Bulk Composition]

Based on the results of bulk composition analysis (Table 2) and surface composition analysis (Table 3) for the complex oxide obtained in Example 2, the degree of deviation of the surface composition from the bulk composition was calculated by the method described above. The results are shown in Tables 4 to 5. In Table 4, "$CeO_2$," "$ZrO_2$," "$La_2O_3$," "$Nd_2O_3$", and "$Pr_6O_{11}$" represent the degree of deviation with respect to cerium oxide, zirconium oxide, lanthanum oxide, neodymium oxide, and praseodymium oxide, respectively.

[Example 3]

A complex oxide was prepared in the same manner as in Example 1, except that the amounts of cerium chloride, zirconium oxychloride, lanthanum chloride, neodymium chloride, and praseodymium chloride were adjusted such that the mass of cerium element in terms of cerium oxide, the mass of zirconium element in terms of zirconium oxide, the mass of lanthanum element in terms of lanthanum oxide, the mass of neodymium element in terms of neodymium oxide, and the mass of praseodymium element in terms of praseodymium oxide were 40% by mass, 46% by mass, 2% by mass, 4% by mass, and 8% by mass, respectively, based on the total mass of these.

The complex oxide obtained in Example 3 was subjected to measurement of $D_{50}$ and $D_{90}$, measurement of specific surface area, and bulk composition analysis by XRF in the same manner as in Example 1. The results are shown in Tables 1 to 2.

With respect to the complex oxide obtained in Example 3, the surface composition analysis by XPS and the calculation of the degree of deviation of the surface composition from the bulk composition were performed in the same manner as in Example 2. The results are shown in Tables 3 to 5.

[Comparative Example 1]

(1) Preparation of First Slurry

Cerium chloride, zirconium oxychloride, lanthanum chloride, neodymium chloride, and praseodymium chloride were dissolved in water to obtain 107 kg of a raw material solution. The amounts of cerium chloride, zirconium oxychloride, lanthanum chloride, neodymium chloride, and praseodymium chloride were adjusted such that the mass of cerium element in terms of cerium oxide, the mass of zirconium element in terms of zirconium oxide, the mass of lanthanum element in terms of lanthanum oxide, the mass of neodymium element in terms of neodymium oxide, and the mass of praseodymium element in terms of praseodymium oxide were 40% by mass, 50% by mass, 2% by mass, 4% by mass, and 4% by mass, respectively, based on the total mass of these.

The temperature of the raw material solution was raised to 85°C, and a 25% by mass ammonium sulfate aqueous solution was added dropwise to the raw material solution with stirring such that the molar quantity of a sulfate ion was 1.0 times the molar quantity of a zirconium element to form a precipitate, thereby obtaining a first slurry. After the dropwise addition was completed, the precipitate was aged at 85°C while stirring the first slurry.

(2) Preparation of Second Slurry

The first slurry cooled to 40°C, and then a 24% by mass aqueous solution of sodium hydroxide was added dropwise to the first slurry with stirring such that the molar quantity of a hydroxide ion was 2.5 times the molar quantity of an oxygen element that is required to allow each of a cerium element, a zirconium element, a lanthanum element, a neodymium element and a praseodymium element to become oxide, to form a precipitate, thereby obtaining a second slurry. The pH of the second slurry was 13.5. After the dropwise addition was completed, the precipitate was aged at 40°C while stirring the second slurry.

(3) Preparation of Cake

After the aging of the precipitate, the second slurry was filtered and washed using a filter press (TFP-4-8 MKII, manufactured by Daiki Ataka Engineering Co., Ltd.) to obtain a cake.

(4) Preparation of Complex Oxide

The cake was air-dried, then dried at 90°C overnight, and calcined in a muffle furnace. After the calcining, the product was ground with a grow mill (MULTI MILL, manufactured by Glow Engineering Co., Ltd.) to obtain a powdery complex oxide.

(5) Characteristic Measurement of Complex Oxide

The complex oxide obtained in (4) above was subjected to measurement of $D_{50}$ and $D_{90}$, measurement of specific surface area, and bulk composition analysis by XRF in the same manner as in Example 1. The results are shown in Tables 1 to 2.

With respect to the complex oxide obtained in (4) above, the surface composition analysis by XPS and the calculation of the degree of deviation of the surface composition from the bulk composition were performed in the same manner as in Example 2. The results are shown in Tables 3 to 5.

[Comparative Examples 2 to 4]

To a 100 L vessel, 4 kg of the complex oxide obtained in Comparative Example 1 were placed, and 76 kg of ion-exchanged water was added and stirred to obtain a slurry having a complex oxide concentration of 5% by mass. The obtained slurry was transferred to a bead mill (Ultra Apex Mill UAM-1, manufactured by Hiroshima Metal & Machinery Co., Ltd.) by using a pump, and a wet grinding treatment with the bead mill was repeatedly performed.

The conditions of the grinding treatment with the bead mill were as follows.

Beads used: $ZrO_2$ beads with a diameter of 0.1 mm
Bead filling: 1.95 kg
Filling rate: 80%
Mill rotation speed: 3200 rpm
Number of times of treatment (pass) by bead mill: 1 to 4 times
Slurry supply rate: 0.89 L/min

The slurry after being treated once (Comparative Example 2), twice (Comparative Example 3), or four times (Comparative Example 4) by the bead mill was sampled. The sampled slurry was filtered and washed using ion-exchanged water to obtain a ground product of the complex oxide.

The ground products of the complex oxides obtained in Comparative Examples 2 to 4 were subjected to measurement of $D_{50}$ and $D_{90}$, measurement of specific surface area, and bulk composition analysis by XRF in the same manner as in Example 1. The results are shown in Tables 1 to 2.

With respect to the ground products of the complex oxides obtained in Comparative Example 2 to 4, the surface composition analysis by XPS and the calculation of the degree of deviation of the surface composition from the bulk composition were performed in the same manner as in Example 2. The results are shown in Tables 3 to 5.

[Table 1]

| | Particle Size of Precipitate before Grinding Treatment ($\mu$m) | | Particle Size of Precipitate after Grinding Treatment ($\mu$m) | | Particle Size of Complex Oxide ($\mu$m) | | Specific Surface Area of Complex Oxide after Heat Treatment ($m^2$/g) |
|---|---|---|---|---|---|---|---|
| | $D_{50}$ | $D_{90}$ | $D_{50}$ | $D_{90}$ | $D_{50}$ | $D_{90}$ | |
| Example 1 | 13.5 | 24.2 | 0.9 | 1.9 | 0.3 | 0.5 | 25 |
| Example 2 | - | - | 0.7 | 1.4 | 0.3 | 0.5 | 22 |
| Example 3 | - | - | 0.7 | 1.3 | 0.3 | 0.6 | 21 |
| Comparative Example 1 | - | - | - | - | 36.9 | 76.9 | 52 |
| Comparative Example 2 | - | - | - | - | 4.8 | 22.7 | 29 |
| Comparative Example 3 | - | - | - | - | 0.4 | 8.4 | 22 |
| Comparative Example 4 | - | - | - | - | 0.3 | 3.4 | 18 |

[Table 2]

| | XRF Analysis Value of each Metal Element in terms of Oxide (% by mass) | | | | |
|---|---|---|---|---|---|
| | $CeO_2$ | $ZrO_2$ | $La_2O_3$ | $Nd_2O_3$ | $Pr_6O_{11}$ |
| Example 1 | 40.16 | 49.19 | 2.67 | 3.94 | 4.04 |
| Example 2 | 40.49 | 45.25 | 2.17 | 8.03 | 4.06 |
| Example 3 | 40.46 | 45.06 | 2.13 | 4.24 | 8.11 |
| Comparative Example 1 | 40.61 | 49.15 | 2.10 | 4.09 | 4.05 |
| Comparative Example 2 | 40.61 | 49.15 | 2.10 | 4.09 | 4.05 |
| Comparative Example 3 | 40.61 | 49.15 | 2.10 | 4.09 | 4.05 |
| Comparative Example 4 | 40.61 | 49.15 | 2.10 | 4.09 | 4.05 |
| Reference Sample | 40.39 | 49.31 | 2.09 | 4.15 | 4.06 |

[Table 3]

| | XPS Analysis Value of each Metal Element in terms of Oxide (% by mass) | | | | |
|---|---|---|---|---|---|
| | $CeO_2$ | $ZrO_2$ | $La_2O_3$ | $Nd_2O_3$ | $Pr_6O_{11}$ |
| Example 1 | - | - | - | - | - |
| Example 2 | 36.77 | 51.98 | 2.18 | 2.70 | 6.37 |
| Example 3 | 34.63 | 50.54 | 2.10 | 0.87 | 11.86 |
| Comparative Example 1 | 35.91 | 53.99 | 2.12 | 1.32 | 6.66 |
| Comparative Example 2 | 36.72 | 52.90 | 2.09 | 1.73 | 6.56 |
| Comparative Example 3 | 39.40 | 53.23 | 1.68 | 0.87 | 4.82 |
| Comparative Example 4 | 37.13 | 55.15 | 1.76 | 0.91 | 5.05 |
| Reference Sample | 48.81 | 41.62 | 1.61 | 1.66 | 6.30 |

[Table 4]

| | Correction Value of XPS Analysis Value of each Metal Element in terms of Oxide (% by mass) | | | | |
|---|---|---|---|---|---|
| | $CeO_2$ | $ZrO_2$ | $La_2O_3$ | $Nd_2O_3$ | $Pr_6O_{11}$ |
| Correction Coefficient | 0.83 | 1.18 | 1.30 | 2.50 | 0.64 |
| Example 1 | - | - | - | - | - |
| Example 2 | 28.92 | 58.13 | 2.69 | 6.40 | 3.86 |
| Example 3 | 28.49 | 59.12 | 2.71 | 2.16 | 7.52 |
| Comparative Example 1 | 28.71 | 61.35 | 2.65 | 3.18 | 4.11 |
| Comparative Example 2 | 29.27 | 59.94 | 2.61 | 4.15 | 4.03 |
| Comparative Example 3 | 31.76 | 61.01 | 2.12 | 2.11 | 3.00 |
| Comparative Example 4 | 29.72 | 62.76 | 2.21 | 2.19 | 3.12 |

[Table 5]

| | Degree of Deviation of Surface Composition from Bulk Composition |
|---|---|
| Correction Coefficient | - |
| Example 1 | 0.91 |
| Example 2 | 0.86 |
| Example 3 | 0.97 |
| Comparative Example 1 | 1.05 |
| Comparative Example 2 | 0.71 |
| Comparative Example 3 | 0.73 |

As shown in Table 1, in each of Examples 1 to 3, it was possible to obtain a composite oxide containing a zirconium element, a cerium element, and other rare earth metal elements (lanthanum element, neodymium element, and praseodymium element), in which the $D_{50}$ and $D_{90}$ of the complex oxide measured by the laser diffraction scattering particle size distribution measurement method were 0.5 μm or less and 1 μm or less, respectively.

As shown in Table 1, each of the complex oxides of Examples 1 to 3 had a specific surface area measured by the BET method after heat treatment at 1000°C for 3 hours in an air atmosphere, of 20 m²/g or more.

As shown in Table 5, the degree of deviation of the surface composition from the bulk composition (ratio of the percentage by mass (surface composition) of other rare earth metal elements (lanthanum element, neodymium element, and praseodymium element) in terms of oxide measured by X-ray photoelectron spectroscopy to the percentage by mass (bulk composition) of other rare earth metal elements (lanthanum element, neodymium element, and praseodymium element) in terms of oxide measured by X-ray fluorescence spectroscopy) was 0.91 for the complex oxide of Example 2, and 0.86 for the complex oxide of Example 3. From these results, it can be seen that in Examples 2 and 3, the surface concentration of the other rare earth metal elements (lanthanum element, neodymium element, and praseodymium element), which are presumed to contribute to the improvement of the heat resistance of the complex oxide, is higher than in Comparative Examples 3 and 4, where the $D_{50}$ of the complex oxide is comparable to Examples 2 and 3.

**Claims**

1. A complex oxide comprising a zirconium element, a cerium element, and optionally another rare earth metal element, wherein $D_{50}$ and $D_{90}$ of the complex oxide measured by a laser diffraction scattering particle size distribution measurement method are 0.5 $\mu$m or less and 1 $\mu$m or less, respectively.

2. The complex oxide according to claim 1, wherein a specific surface area measured by a BET method after heat treatment at 1000°C for 3 hours in an air atmosphere is 20 m²/g or more.

3. The complex oxide according to claim 1 or 2, wherein the complex oxide contains the other rare earth metal element, wherein a percentage by mass of the other rare earth metal element in terms of oxide in a surface of the complex oxide measured by X-ray photoelectron spectroscopy is 0.80 times or more a percentage by mass of the other rare earth metal element in terms of oxide in the whole of the complex oxide.

4. A method for producing a complex oxide, comprising:

   (a) preparing for a raw material solution containing water, a zirconium salt, a cerium salt, and optionally another rare earth metal salt;
   (b) adding to the raw material solution, a first precipitant selected from: an aqueous solution containing a sulfate ion; and a compound that can dissolve in water to produce a sulfate ion, to form a first precipitate containing a zirconium element, thereby obtaining a first slurry containing the first precipitate;
   (c) subjecting the first slurry to a wet grinding treatment;
   (d) adding to the first slurry after the wet grinding treatment, a second precipitant selected from: an aqueous solution containing a hydroxide ion; and a compound that can dissolve in water to produce a hydroxide ion, to form a second precipitate containing a zirconium element, a cerium element, and optionally another rare earth metal element, thereby obtaining a second slurry containing the second precipitate;
   (e) obtaining a cake from the second slurry; and
   (f) calcining the cake to produce a complex oxide containing a zirconium element, a cerium element, and optionally another rare earth metal element.

5. The production method according to claim 4, wherein:

   in step (e), a first cake is obtained from the second slurry, and the first cake is treated with an alcohol-containing liquid to obtain a second cake having an alcohol concentration of 90 vol% or more; and
   in step (f), the second cake is calcined to produce the complex oxide.

6. The production method according to claim 4 or 5, wherein in step (c), the wet grinding treatment is performed such that $D_{50}$ of a ground product of the first precipitate measured by a laser diffraction scattering particle size distribution measurement method is 0.5 $\mu$m or more and 1.5 $\mu$m or less.

7. The production method according to any one of claims 4 to 6, wherein in step (c), the wet grinding treatment is performed such that $D_{90}$ of a ground product of the first precipitate measured by a laser diffraction scattering particle size distribution measurement method is 1 $\mu$m or more and 2.5 $\mu$m or less.

8. The production method according to any one of claims 4 to 7, wherein in step (c), the wet grinding treatment is performed using beads.

9. The production method according to claim 8, wherein in step (c), the wet grinding treatment is performed such that acceleration applied to the beads exceeds 1 G.

10. The production method according to claim 7 or 8, wherein the beads have a diameter of 0.3 mm or less.

11. The production method according to any one of claims 8 to 10, wherein in step (c), the wet grinding treatment is performed for 1 hour or more.

12. The production method according to any one of claims 4 to 11, wherein in step (b), the first precipitate is added to the raw material solution such that a molar quantity of a sulfate ion in the raw material solution is 0.4 times or more and 2 times or less a molar quantity of a zirconium element in the raw material solution.

13. The production method according to any one of claims 4 to 12, wherein in step (b), a temperature of the raw material solution when adding the first precipitant is 70°C or more and 100°C or less.

14. The production method according to any one of claims 4 to 13, wherein in step (d), the second precipitant is added to the first slurry such that a molar quantity of a hydroxide ion in the first slurry is 2 times or more a molar quantity of an oxygen element that is required to allow each of a zirconium element, a cerium element, and another rare earth metal element in the first slurry to become oxide.

15. The production method according to any one of claims 4 to 14, wherein in step (d), a temperature of the first slurry when adding the second precipitate is 35°C or more and 60°C or less.

## INTERNATIONAL SEARCH REPORT

International application No.

**PCT/JP2021/046309**

### A. CLASSIFICATION OF SUBJECT MATTER

***B01J 35/10***(2006.01)i; ***C01G 25/00***(2006.01)i; ***B01J 23/10***(2006.01)i
FI:    C01G25/00; B01J23/10 A; B01J35/10 301F

According to International Patent Classification (IPC) or to both national classification and IPC

### B. FIELDS SEARCHED

Minimum documentation searched (classification system followed by classification symbols)

B01J35/10; C01G25/00; B01J23/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2019-122895 A (NE CHEMCAT CORP.) 25 July 2019 (2019-07-25) <br> claims, examples, tables, etc. | 1-3 |
| X | JP 2010-16064 A (KAO CORP.) 21 January 2010 (2010-01-21) <br> claims, examples, tables, etc. | 1-3 |
| A | JP 2009-249275 A (DAIICHI KIGENSOKAGAKU KOGYO CO., LTD.) 29 October 2009 (2009-10-29) <br> claims, examples, etc. | 1-15 |
| A | JP 2016-513008 A (JOHNSON MATTHEY PUBLIC LIMITED COMPANY) 12 May 2016 (2016-05-12) <br> claims, examples, etc. | 1-15 |
| A | US 6180556 B1 (VENEZIATECNOLOGIE S.P.A.) 30 January 2001 (2001-01-30) <br> claims, examples | 1-15 |
| A | JP 2006-32132 A (HOSOKAWA FUNTAI GIJUTSU KENKYUSHO K.K.) 02 February 2006 (2006-02-02) <br> claims, examples, paragraphs [0030], [0039], etc. | 1-15 |

☐ Further documents are listed in the continuation of Box C.     ☑ See patent family annex.

| | |
|---|---|
| \* Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **15 February 2022** | **01 March 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
**Information on patent family members**

International application No.

**PCT/JP2021/046309**

| Patent document cited in search report | | | Publication date (day/month/year) | Patent family member(s) | | Publication date (day/month/year) |
|---|---|---|---|---|---|---|
| JP | 2019-122895 | A | 25 July 2019 | (Family: none) | | |
| JP | 2010-16064 | A | 21 January 2010 | (Family: none) | | |
| JP | 2009-249275 | A | 29 October 2009 | US 2009/0258781 claims, examples | A1 | |
| | | | | EP 2108621 | A1 | |
| | | | | CN 101596451 | A | |
| JP | 2016-513008 | A | 12 May 2016 | US 2014/0234189 claims, examples | A1 | |
| | | | | WO 2014/125296 | A1 | |
| | | | | CN 105008025 | A | |
| | | | | KR 10-2015-0119140 | A | |
| US | 6180556 | B1 | 30 January 2001 | EP 983967 claims, examples | A1 | |
| JP | 2006-32132 | A | 02 February 2006 | (Family: none) | | |

Form PCT/ISA/210 (patent family annex) (January 2015)

23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018047425 A

- JP 2019198838 A